# EUROPÄISCHE PATENTSCHRIFT

(11) **EP 2 282 428 B1**
(45) Veröffentlichungstag und Bekanntmachung des Hinweises auf die Patenterteilung: **05.06.2013**
(21) Anmeldenummer: 09165805.4
(22) Anmeldetag: 17.07.2009
(51) Int. Cl.: H04J 3/14, H04L 1/22, H04L 1/08, H04L 1/00, H04L 1/24

(54) **Verfahren und System zur Umschaltung von Pfaden**
Method and system for switching of paths
Procédé et sytème pour la commutation de chemins

(43) Veröffentlichungstag der Anmeldung: 09.02.2011
(73) Patentinhaber: Albis Technologies AG, 8047 Zürich (CH)
(72) Erfinder: Wenger, Bruno, 8804, Au (CH)
(74) Vertreter: Kley, Hansjörg

(56) Entgegenhaltungen:
- US-A1- 2001 003 484
- US-A1- 2004 015 770

## Beschreibung

Die vorliegende Erfindung betrifft ein Verfahren zur Umschaltung von einem Pfad auf einen anderen Pfad nach dem Oberbegriff des Patentanspruchs 1 sowie ein zugehöriges System nach dem Oberbegriff des Patentanspruchs 9.

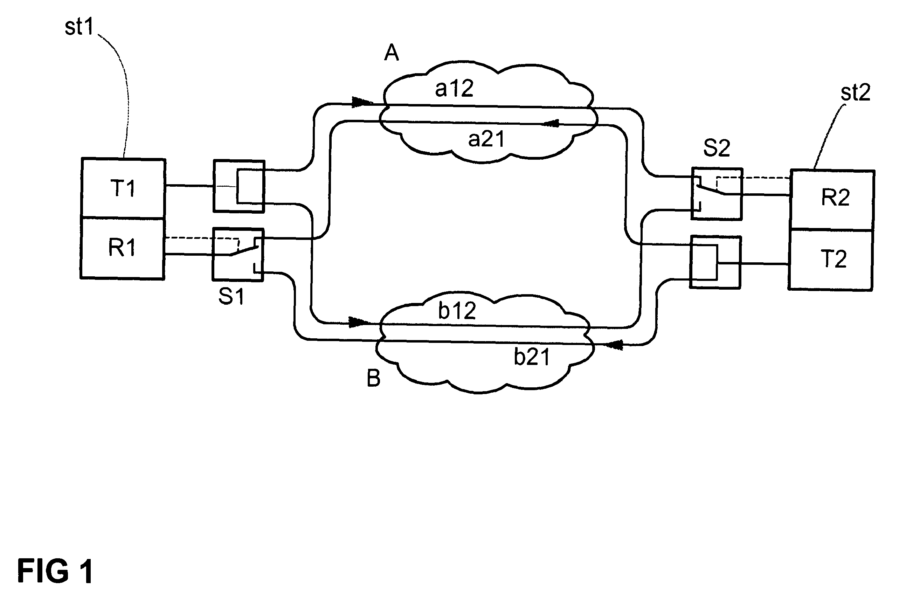

Um eine sichere Datenverbindung zwischen zwei Stationen zu realisieren, werden oftmals zwei unabhängige Pfade A und B verwendet. Die Stationen 1 und 2 senden dabei die Daten jeweils auf beiden Pfaden A und B und empfangen sie jeweils vom gleichen Pfad. Diese Situation ist in der Figur 1 dargestellt, bei der beispielsweise der Pfad A für den Normalbetrieb vorgesehen ist.

Falls eine der Leitungen a12 oder a21 im Pfad A unterbrochen wird, soll die Übertragung komplett oder teilweise auf den Pfad B umgeschaltet werden. Dies bedeutet, dass beide Stationen oder nur eine Station ihren Schalter S1 / S2 umlegen müssen. Die komplette Umschaltung heisst «dual ended mode», die teilweise Umschaltung heisst «single ended mode». Im single ended mode kann es also vorkommen, das jeder Pfad A bzw. B nur für eine Richtung benutzt wird.

Der Unterbruch einer Leitung a12 oder a21 wird vom jeweiligen Empfänger R2 oder R1 erkannt. Dies hat zur Folge, dass er seine Schalter S2 bzw. S1 auf Pfad B (b12 und b21) umlegt und im dual ended mode gleichzeitig die andere Station auffordert, dies ebenfalls zu tun. Dieses Verfahren ist in der SDH-Technik unter dem Begriff SNCP (Sub Network Connection Protection) bekannt und in ITU-T G.841 für SDH-Signale normiert.

Damit das Verfahren - unabhängig von den Festlegungen in ITU-T G.841 angewendet werden kann, müssen mindestens zwei Voraussetzungen gegeben sein:

i) Jeder Empfänger R1 und R2 muss die Qualität der beiden ankommenden Signale beurteilen können. Nur so kann entschieden werden, ob allenfalls auf den anderen Pfad umgeschaltet werden soll.

ii) Jeder Sender T1 und T2 muss der Gegenseite mitteilen können, dass sie ebenfalls auf den Ersatzpfad umschalten soll. Dies ist auch deshalb erforderlich, um allfällige Laufzeitunterschiede zwischen den beiden Pfaden ausgleichen zu können.

Im Fall von SDH-Signalen sind die Mechanismen exakt spezifiziert. Die benötigten Bits zur Überwachung und Steuerung sind im Header der SDH-Rahmen festgelegt, wobei für die Implementierung folgende Informationen bereitgestellt werden müssen:

Gemäss ITU-TG.841 [1] ist eine ganze Kaskade von Informationen für die Detektion und Umschaltung bereitzustellen wie
- Loss of Signal LOS, siehe 7.4.3.1 in [1]
- Alarm Indication Signal AIS;
- Bit Interleaved Parity;
- Signal degraded.
Die Priorisierung der einzelnen Indikatoren ist in der Tabelle «7-13/G.841 - Priority of local requests» in [1] angegeben. Diese Informationen sind erforderlich im Bereich SDH, wo eine Vielzahl niederratigen Datenströmen (z.B. 64 kbps) zu einem hochratigen Datenstrom zusammengefasst werden müssen.

Für den allgemeinen Fall der Datenübertragung, also ausserhalb von SDH, gibt es kein normiertes Verfahren. Das innerhalb SDH-Ringen anzuwendende Verfahren stellt für viele Fälle einen «Overkill» dar und ist dementsprechend aufwendig zu implementieren.

In WO 2007/005686 A1 ist ein «Verfahren und eine Vorrichtung zum Synchronisieren von Datenkanälen unter Verwendung eines Entzerrungskanals» offenbart. Dieses Verfahren beruht darauf, dass aus den Datenkanälen alternierend gerade und ungerade Parität in einem sogenannten Entzerrungskanal zusammengefasst werden und daraus die Datenkanäle durch den Empfänger ausgerichtet und synchronisiert werden. Auch dieses Verfahren leistet keinen Beitrag zur Aufgabe, bei einer Datenübertragung auf einfache und sichere Weise von einem (Übertragungs-) Kanal auf einen anderen (Übertragungs-) Kanal umschalten zu können.

[0012'] Die Schrift US 2001/00033484 A1 [4] offenbart ein Verfahren und eine Einheit zur Umschaltung von Pfaden für eine optische Übertragungsstrecke, wonach dies mit Bereitstellen eines ersten und zweiten Mehrfachrahmens erfolgt, die ihrerseits sogenannte K1-und K2-Bytes enthalten. Diese K1-und K2-Bytes enthalten Schutzinformationen des Abschnittskopfes in SDH oder des Leitungskopfes in SONET für die Pfadumschaltung. Das in der Schrift US 2001/00033484 A1 [4] genannte Verfahren ist jedoch wie vorstehend im Absatz [0010] bereits aufgeführt, für viele non-SDH-Anwendungen als zu komplex zu beurteilen.

Der vorliegende Erfindung liegt daher die Aufgabe zugrunde, eine einfaches und sicheres Verfahren anzugeben, dass eine Umschaltung von einem Pfad mit je zwei Übertragungskanälen auf einen anderen anderen Pfad mit je zwei Übertragungskanälen erlaubt, wenn der erste Pfad aus irgendwelchen Gründen auch immer unidirektional oder gar bidirektional unterbrochen ist.

Diese Aufgabe wird gelöst für ein Verfahren gemäss den im Patentanspruch 1 angegebenen Merkmalen und für das System gemäss den im Patentanspruch 7 angegebenen Merkmalen.

Vorteilhafte Ausgestaltungen der Erfindung sind in weiteren Ansprüchen angegeben.

Die Grundidee der Erfindung basiert darauf, dass die Sender T1 und T2 stets alternierend ein Paritätsbit in einem Header bzw. einem besonderen Zeitschlitz für die Signalisierung einfügen. Die Parität wird über einen ganzen Rahmen/Frame gebildet. Dadurch werden Übertragungsfehler wie folgt erkannt:
i) Fehlerhafte Parität P;
ii) Fehlender Wechsel der Parität P.
Die Alternierung - also der Wechsel der Parität P - kann dabei nach jedem zu übertragenden Datenrahmen oder nach einer festgelegten Anzahl von zu übertragenden Datenrahmen erfolgen oder nach einer anderen beliebigen vereinbarten Regel.

Für das Umschalten der Gegenstation St2 oder St1 auf den anderen Pfad ist im Rahmen/Frame ein Bit S vorgesehen, das den zu verwendenden Pfad A oder B spezifiziert. Das Bit S wird nur ausgewertet, wenn vorgängig die Parität P korrekt erkannt wurde. Dazu ist es erforderlich, dass der Empfänger die Parität P' über den empfangenen Datenrahmen bestimmt und diese mit der übertragenen Parität P vergleicht.

Die Erfindung wird nachfolgend anhand der Zeichnung beispielsweise näher erläutert. Dabei zeigen:

Figur 1
Darstellung der prinzipiellen Situation bei der Datenüberübertragung zwischen zwei Stationen 1 und 2 über je einen getrennten Pfad A bzw. B;

Figur 2
Rahmenstruktur für die Datenübertragung in einer allgemeinen,unspezifischen Anwendung;

Figur 3.
Rahmenstruktur für die Datenübertragung in einer spezifischen PCM-Anwendung.

Figur 1 zeigt die prinzipiellen Situation bei der Datenüberübertragung zwischen zwei Stationen 1 und 2. Jeder Pfad A bzw. B weist zwei Kanäle auf, die für eine richtungsgetrennte Datenübertragung vorgesehen sind. Aus Einfachheitsgründen wird hier anstelle von Übertragungskanal einfach von Kanal/Channel gesprochen.

Die Erfindung ist unabhängig davon, ob die Kanäle in einem Multiplexverfahren über je getrennte Leitungen oder eine Leitung pro Pfad A bzw. B geführt werden. In Figur 1 repräsentieren a12, a21 bzw. b12, b21 je einen Kanal pro Pfad A bzw. B. Mit S1 bzw. S2 sind die Schalter für die Zuschaltung eines Empfangskanales bezeichnet.

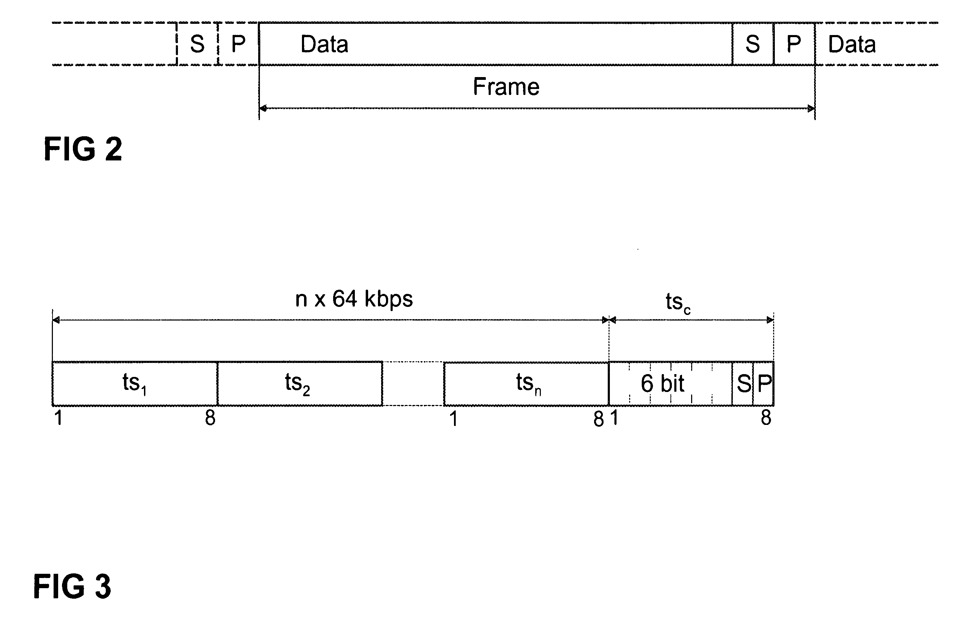

Figur 2 zeigt eine erste Ausführungsform der vorliegenden Erfindung für eine eine Block- oder Rahmenstruktur, in der nebst Nutzdaten «Data», vgl. Fig. 2 mindestens 2 freie Bits für das Verfahren zur Verfügung stehen. Diese Bits haben folgende Bedeutung:

Bit S
Das Bit S gibt an, ob der Pfad A oder B verwendet werden soll. Über dieses Bit S kann der Empfänger R1 bzw. R2 und allenfalls auch der Sender T2 bzw. T1 der Gegenseite gesteuert werden.

Bit P
Das Bit P ist ein Paritätsbit gemäss der nachfolgend angegebenen Regel:
i) Das Bit P beinhaltet die Parität über den gesamten Rahmen inkl. Bit S, aber ohne das Bit P.
ii) Die zu bildende Parität wechselt mit jedem Rahmen: gerade Parität / ungerade Parität).
iii) Fehler in der Übertragung werden demzufolge erkannt bei fehlerhafter Parität (infolge von Bitfehlern) oder bei fehlendem Wechsel zwischen gerader und ungerader Parität (infolge Unterbruch der Strecke). iv) Das Bit S wird nur ausgewertet, wenn die Parität P als korrekt erkannt wurde. Damit wird ein irrtümliches Umschalten infolge von Bitfehlern vermieden.

Anmerkungen:
Ohne Alternierung zwischen gerader und ungerader Parität P könnte ein Ausfall der Verbindung nicht sicher erkannt werden,
wenn alle Bits immer gleich bleiben und zufälligerweise das Paritätsbit immer richtig steht. Damit kann auch eine inaktive, bzw. unterbrochene Verbindung sicher erkannt werden.
Für die Kanalauswahl ist ein Steuerbit S vorgesehen, mit einer Redundanz können für die Kanalauswahl auch mehrere Bits verwendet werden.

Auf der Empfängerseite, z.B. St2, wird daher auf die gleiche Weise vom empfangenen Rahmen die Parität P' gebildet und mit der übertragenen Parität P verglichen. Ungleichheit bedeutet einen Unterbruch oder Übertragungsfehler für den betreffenden Datenübertragungskanal a12 oder b12.

Nachfolgend wird ein Beispiel zur Bildung des Paritätsbits P beim Sender mit 8 Bits Nutzdaten angegeben:

Erster zu übertragender Rahmen

| | | | | | | | | | | | |
|---|---|---|---|---|---|---|---|---|---|---|---|
| 1 | 1 | 0 | 0 | 1 | 1 | 1 | 0 | | | 0 | 0 |
| | | | | | | | | | | S | P |

Die gerade Parität wird gebildet durch eine Quersumme über die einzelnen Bits modulo 2, vorliegend 5 mod 2 = 1.

Zweiter zu übertragender Rahmen mit identischem Nutzinhalt zum ersten Rahmen

| | | | | | | | | | | | |
|---|---|---|---|---|---|---|---|---|---|---|---|
| 1 | 1 | 0 | 0 | 1 | 1 | 1 | 0 | | | 0 | 0 |
| | | | | | | | | | | S | P |

Für den zweiten zu übertragenden Rahmen wird die ungerade Parität gebildet durch eine Quersumme über die einzelnen Bits plus 1 modulo 2, vorliegend (5+1) mod 2 = 0.

Dritter zu übertragender Rahmen

| | | | | | | | | | | | |
|---|---|---|---|---|---|---|---|---|---|---|---|
| 1 | 1 | 0 | 0 | 1 | 1 | 1 | 1 | | | 0 | 0 |
| | | | | | | | | | | S | P |

Für den dritten zu übertragenden Rahmen wird die gerade Parität gebildet durch eine Quersumme über die einzelnen Bits modulo 2, vorliegend 6 mod 2 = 0.

Zur Alternierung des Paritätsbits ist es auch möglich, die Parität nach einer festen Regel zu bilden z.B.
- i mal gerade Parität;
- k mal ungerade Parität.
i und k bezeichnen natürliche Zahlen 1, 2, 3, .. .

Beispiel einer festen Regel:
3 mal gerade Parität über die zu übertragenden Rahmen;
2 mal ungerade Parität über die zu übertragenden Rahmen;
3 mal gerade Parität über die zu übertragenden Rahmen; usw.

Weiteres Beispiel einer festen Regel: Auf beiden Stationen wird die Alternierung durch die gleiche Pseudozufallssequenz festgelegt.

Die feste Regel zur Bildung der Parität kann auch pro Übertragungsrichtung verschieden ausgebildet sein.

Die nach einer festen Regel vorgenommen Alternierung ist wichtig, um festzustellen, dass ein Kanal überhaupt noch in Ordnung ist bzw. aktiv ist.

Die Auswertung der übertragenen Parität P mit der im Empfänger gebildeten Parität P' kann beinhalten, dass hier eine Filterung vorgenommen wird. Das bedeutet beispielsweise, dass erst nach anhaltendem Auftreten von Paritätsfehlern eine Umschaltung vorgenommen wird. Dadurch wird eine umgewollte Umschaltung bei Auftreten von Einzelfehlern vermieden. Diese Filterung ist in einer Filterregel festgelegt.

Figur 3 zeigt eine zweite Ausführungsform der vorliegenden Erfindung für n x 64 kbps Daten in n Zeitschlitzen eines PCM-Rahmens. In diesem Fall werden für den Datenstrom n aufeinanderfolgende Zeitschlitze ts₁, ts₂, .. , tsₙ benutzt, von denen jeder eine Kapazität bzw. Durchsatz von 64 kbps hat. Dieses Verfahren ist in ITU-T G.704 [2] spezifiziert.

Einer weiterer Zeitschlitz ts_{c} - Steuerzeitschlitz ts_{c} oder «control time slot» ts_{c} genannt - wird zur Übertragung des Paritätsbits P und des Steuerbits S verwendet. Die vorangehenden 6 Bits können anderweitig, beispielsweise zur Übertragung einer Signalisierung, benutzt werden. Die genaue Anordnung der vorgenannten zwei Bits P und S innerhalb des Steuerzeitschlitzes ts_{c} ist unerheblich, diese ist muss als Protokoll-Element einfach fest vereinbart sein.

Die vorliegende Erfindung ist nicht auf die beiden Ausführungsformen beschränkt, sondern kann überall dort angewendet werden, wo zwei Verbindungspfade A bzw. B. über zwei verschiedene physische Medien (Layer 1) geführt werden. Dabei ist es nicht in jedem Fall erforderlich, dass die Pfade über verschiedene physische Medien geführt werden, denkbar ist auch eine Anwendung des Verfahrens, wo zwei logisch verschiedene Pfade über sog. «leased lines» (=Mietleitungen) geführt werden, wo aus Anwendungssicht nicht mehr ersichtlich ist, wie die Kanäle und Pfade physisch geführt werden.

### Liste der verwendeten Bezugszeichen und Abkürzungen.

- A, B: Pfad
- a12: Kanal auf Pfad A von Station 1 zu Station 2
- a21: Kanal auf Pfad A von Station 2 zu Station 1
- b12: Kanal auf Pfad B von Station 1 zu Station 2
- b21: Kanal auf Pfad B von Station 2 zu Station 1
- P: Paritätsbit durch den Sender gebildet
- P': Paritätsbit durch den Empfänger gebildet
- PCM: Pulse Code Modulation
- R1, R2: Empfänger/receiver der Station 1 bzw. 2
- S: Steuerbit für die Umschaltung von einem Kanal auf einen anderen Kanal
- S1, S2: Schalter/switch für die Zuschaltung eines Empfangskanals a12, b12, bzw.
- St1, St2: Station
- T1, T2: Sender/transmitter der Station 1 bzw. 2
- SNCP: Subnetwork Connection Protection

### Liste der zitierten Schriften

[1] ITU-T G.841
   TELECOMMUNICATION STANDARDIZATION SECTOR OF ITU (10/98) SERIES G: TRANSMISSION SYSTEMS AND MEDIA, DIGITAL SYSTEMS AND NETWORKS
   Digital transmission systems - Digital networks - SDH network characteristics Types and characteristics of SDH network protection architectures
[2] ITU-T G.704
   TELECOMMUNICATION STANDARDIZATION SECTOR OF ITU (10/98) SERIES G: TRANSMISSION SYSTEMS AND MEDIA, DIGITAL SYSTEMS AND NETWORKS
   Digital transmission systems - Terminal equipments - General Synchronous frame structures used at 1544, 6312, 2048, 8448 and 44 736 kbit/s hierarchical levels
[3] WO 2007/005686 A1; EP 1 900 166
   «VERFAHREN UND VORRICHTUNG ZUM SYNCHRONISIEREN VON DATENKANÄLEN UNTER VERWENDUNG EINES ENTZERRUNGSKANALS» LUCENT TECHNOLOGIES INC. 600 Mountain Avenue
[4] US 2001/0003484 A1
   «Optical line protection device and optical line protection method»
   Fujita, Yoshitaka.

## Patentansprüche

1. Verfahren zur Datenübertragung zwischen zwei über zwei Pfade (A, B) verbundene Stationen (St1, St2), wobei
- jede Station (St1, St2) je mit einem Sender (T1, T2) und Empfänger (R1, R2) versehen sind;
- die beiden Pfade (A, B) pro Richtung je einen Übertragungskanal (a12, a21; b12, b21) aufweisen und die Daten in einem Datenrahmen (data, ts₁, ts₂, .) von jedem Sender (T1, T2) auf zwei Kanälen (a12, b12; a21, b21) übertragen werden wobei ein Datenrahmen in Bits gegliederte Nutzdaten und ein Steuerbit (S) enthält, das den vom Empfänger (R1, R2) zu benutzenden Kanal identifiziert;
**gekennzeichnet durch** die Verfahrensschritte:
A **durch** den Sender (T1, T2) einer jeden Station (St1, St2) wird ein Paritätsbit (P) über alle Bits der Nutzdaten und das Steuerbit des zu übertragenden Datenrahmen (Frame, n x 64 kbps) nach einer festen Regel gebildet und mit übertragen, wobei
- im Datenrahmen das Paritätsbit (P) enthalten ist und
- die feste Regel darin besteht, das Paritätsbit (P) alternierend nach gerader bzw. ungerader Parität zu bilden.
B **durch** den Empfänger (R1, R2) einer jeden Station (St1, St2) wird das Paritätsbit (P') nach der gleichen festen Regel gebildet und mit dem übertragenen Paritätsbit (P) verglichen;
C wenn im Verfahrensschritt B Ungleichheit zwischen dem im Empfänger gebildeten Paritätsbit (P') und dem übertragenen Paritätsbit (P) festgestellt wird, erfolgt **durch** den betreffenden Empfänger (R1, R2) eine Umschaltung (S1, S2) vom einen Übertragungskanal (a12, a21; b12, b21) auf den anderen Übertragungskanal.

2. Verfahren nach Anspruch 1,
**dadurch gekennzeichnet, dass**
im Verfahrensschritt A die feste Regel darin besteht, das Paritätsbit alternierend wie folgt zu setzen:
i mal gerade Parität;
k mal ungerade Parität; dabei bezeichnen i und k je eine festgelegte natürliche Zahl 1, 2, ...

3. Verfahren nach Anspruch 1 oder 2,
**dadurch gekennzeichnet, dass**
Im Verfahrensschritt A die feste Regel pro Übertragungsrichtung festgelegt ist.

4. Verfahren nach einem der Ansprüche 1 bis 3,
**dadurch gekennzeichnet, dass**
im Verfahrensschritt C der Empfänger (R1, R2) einer Station (St1, St2) das Steuerbit für den zugehörigen Sender (T1, T2) der Station (St1, St2) gemäss der erfolgten Umschaltung setzt.

5. Verfahren nach einem der Ansprüche 1 bis 4,
**dadurch gekennzeichnet, dass**
der Datenrahmen aus n x 64 kbps Zeitschlitzen innerhalb eines PCM-Rahmens gebildet wird, und dass ein weiterer Zeitschlitz für die Aufnahme des Paritätsbits (P) und des Steuerbits (S) vorgesehen ist, wobei das Paritätsbit (P) über die n x 64 kbps Zeitschlitze und das Steuerbit (S) gebildet wird.

6. Verfahren nach einem der Ansprüche 1 bis 5,
**dadurch gekennzeichnet, dass**
im Verfahrensschritt C die Umschaltung gemäss einer Filterregel erst nach Feststellung einer mehrmaligen Ungleichheit erfolgt.

7. System mit Mitteln zur Durchführung des Verfahrens nach einem der Ansprüche 1 bis 6 zur Datenübertragung zwischen zwei über zwei Pfade (A, B) verbundene Stationen (St1, St2).

## Claims

1. Method for data transmission between two stations (St1, St2) which are linked via two paths (A, B), wherein
- each of the stations (St1, St2) is provided with a transmitter (T1, T2) and a receiver (R1, R2);
- each of the two paths (A, B) for each direction has a transmission channel (a12, a21; b12, b21) and each transmitter (T1, T2) transmits the items of data in a data frame (data, ts1, ts2, .) on two channels (a12, b12; a21, b21), wherein a data frame contains payload data divided into bits together with a control bit (S) which identifies the channel that the receiver (R1, R2) is to use;
**characterised by** the method steps:
A the transmitter (T1, T2) of any particular station (St1, St2) forms in accordance with a fixed rule a parity bit (P), across all the bits of the payload data together with the control bit in the data frame which is to be transmitted (Frame, n x 64 kbps), and this is included in the transmission, wherein
- the parity bit (P) is contained in the data frame and
- the fixed rule consists in forming the parity bit (P) alternately on the basis of an even or an odd parity;
B the receiver (R1, R2) at any particular station (St1, St2) forms a parity bit (P') in accordance with the same fixed rule, and compares it with the transmitted parity bit (P);
C if it is determined in the method step B that the parity bit (P') formed in the receiver and the transmitted parity bit (P) are unequal, the receiver (R1, R2) concerned will effect a switchover (S1, S2) from one transmission channel (a12, a21; b12, b21) to the other transmission channel.

2. Method according to claim 1,
**characterised in that**
in the method step A, the fixed rule consists in setting the parity bit in alternation as follows:
i times even parity;
k times odd parity; here, i and k each represent a fixed integer 1, 2, ...

3. Method according to claim 1 or 2,
**characterised in that**
in the method step A, the fixed rule is defined separately for each transmission direction.

4. Method according to one of claims 1 to 3,
**characterised in that**
in the method step C, the receiver (R1, R2) in a station (St1, St2) sets the control bit for the associated transmitter (T1, T2) in the station (St1, St2) in accordance with the switchover which has taken place.

5. Method according to one of claims 1 to 4,
**characterised in that**
the data frame is formed of n x 64 kbps timeslots within a PCM frame, and **in that** a further timeslot is provided to accommodate the parity bit (P) and the control bit (S), wherein the parity bit (P) is formed across the n x 64 kbps timeslots together with the control bit (S).

6. Method according to one of claims 1 to 5,
**characterised in that**
in the method step C, the switchover is effected only when repeated inequality is determined by a filtering rule.

7. System with facilities for carrying out the method according to one of claims 1 to 6 for the transmission of data between two stations (St1, St2) which are linked via two paths (A, B).

## Revendications

1. Procédé de transmission de données entre deux stations (St1, St2) reliées par deux chemins (A, B),
- chaque station (St1, St2) étant pourvue d'un émetteur (T1, T2) et d'un récepteur (R1, R2) ;
- les deux chemins (A, B) comportant chacun un canal de transmission (a12, a21 ; b12, b21) pour chaque direction et les données étant transmises dans une trame de données (data, ts1, ts2, .) par chaque émetteur (T1, T2) sur deux canaux (a12, b12 ; a21, b21), une trame de données contenant des données utiles organisées en bits et un bit de commande (S) qui identifie le canal à utiliser par le récepteur (R1, R2) ;
**caractérisé par** les étapes suivantes :
A l'émetteur (T1, T2) de chaque station (St1, St2) forme un bit de parité (P) sur tous les bits des données utiles et le bit de commande de la trame de données à transmettre (Frame, n x 64 kbps) selon une règle fixe et le transmet avec,
- le bit de parité (P) étant contenu dans la trame de données et
- la règle fixe consistant à former le bit de parité (P) en alternance selon une parité paire ou impaire ;
B le récepteur (R1, R2) de chaque station (St1, St2) forme le bit de parité (P') selon la même règle fixe et le compare avec le bit de parité (P) transmis ;
C lorsqu'est constatée, à l'étape B, une inégalité entre le bit de parité (P') formé dans le récepteur et le bit de parité (P) transmis, le récepteur (R1, R2) concerné effectue une commutation (S1, S2) d'un canal de transmission (a12, a21 ; b12, b21) sur l'autre canal de transmission.

2. Procédé selon la revendication 1, **caractérisé en ce que**, à l'étape A, la règle fixe consiste à fixer le bit de parité en alternance comme suit :
i fois parité paire ;
k fois parité impaire, i et k désignant respectivement un nombre naturel déterminé 1, 2, ...

3. Procédé selon la revendication 1 ou 2, **caractérisé en ce que**, à l'étape A, la règle fixe est déterminée pour chaque direction de transmission.

4. Procédé selon l'une des revendications 1 à 3, **caractérisé en ce que**, à l'étape C, le récepteur (R1, R2) d'une station (St1, St2) fixe le bit de commande pour l'émetteur associé (T1, T2) de la station (St1, St2) conformément à la commutation effectuée.

5. Procédé selon l'une des revendications 1 à 4, **caractérisé en ce que** la trame de données est formée à partir de n créneaux temporels de 64 kbps dans une trame PCM et **en ce qu'**un autre créneau temporel est prévu pour la réception du bit de parité (P) et du bit de commande (S), le bit de parité (P) étant formé sur les n créneaux temporels de 64 kbps et le bit de commande (S).

6. Procédé selon l'une des revendications 1 à 5, **caractérisé en ce que**, à l'étape C, la commutation s'effectue conformément à une règle de filtrage seulement après la constatation de plusieurs inégalités.

7. Système comportant des moyens pour exécuter le procédé selon l'une des revendications 1 à 6 pour la transmission de données entre deux stations (St1, St2) reliées par deux chemins (A, B).
